# EUROPÄISCHE PATENTSCHRIFT

(11) **EP 2 065 112 B1**
(45) Veröffentlichungstag und Bekanntmachung des Hinweises auf die Patenterteilung: **16.05.2012**
(21) Anmeldenummer: 08020667.5
(22) Anmeldetag: 28.11.2008
(51) Int. Cl.: B23D 15/12

(54) **Schlagschneidevorrichtung mit einer Rückstelleinrichtung**
Impact cutting device with a reset device
Dispositif de coupe et de percussion doté d'un dispositif de rappel

(30) Priorität: 30.11.2007 DE 102007057638
(43) Veröffentlichungstag der Anmeldung: 03.06.2009
(73) Patentinhaber: Schuster Maschinenbau GmbH, 86920 Denklingen (DE)
(72) Erfinder: Schuster, Helmut, 86920 Denklingen (DE)
(74) Vertreter: Mollekopf, Gerd Willi

(56) Entgegenhaltungen:
- WO-A-2004/078396
- DE-A1- 2 322 770
- GB-A- 568 752

## Beschreibung

Die Erfindung betrifft eine Schlagschneidevorrichtung mit einer Rückstelleinrichtung zum Zustellen eines Schlagelements zu einer Übergabeposition oder einem Übergabebereich einer Beschleunigungseinheit.

Aus der WO 2004/078396 A1 ist eine Schlagschneidevorrichtung mit einer Beschleunigungseinheit bekannt, bei der mittels der Beschleunigungseinheit ein Schlagelement gegen eine Schneideeinheit zum adiabatischen Trennen von Stangenmaterial beschleunigbar ist. Zur Verhinderung von destruktiven Vibrationsausbreitungen bis zur Beschleunigungseinheit wird das Schlagelement unmittelbar vor dem Aufschlag auf die Schneideeinheit von der Beschleunigungseinheit entkoppelt. Nach dem Ausführen des Schlags liegt das Schlagelement auf der Schneideeinheit auf und wird dann mittels einer Hebeeinheit in einen Bereich angehoben, in dem ein Mitnehmer der Beschleunigungseinheit wieder an das Schlagelement ankoppeln kann. Nach dem Ankoppeln des Schlagelements an die Beschleunigungseinheit kann der nächste Schlag zum Abtrennen eines neuen Werkstücks vom Stangenmaterial gegen die Schneideeinheit beschleunigt werden.

Die DE 2 322 770 A1 schlägt eine Schereinrichtung zum Querscheren von Stangenabschnitten vor. Beim Ablauf des hydraulischen Scherens wird mittels Hydraulikflüssigkeit ein Schlagschlitten gegen einen Messerschlitten beschleunigt, um eine in einer Bohrung des Messerschlittens gehaltene Stange abzuscheren. Innerhalb des Schlagschlittens ist eine hydraulisch betätigbare Kolbenstange verschiebbar angeordnet. Die Kolben - bzw. Kupplungsstange ist mit dem Messerschlitten verbunden und liegt bereits vor dem Aufschlagen des Schlagschlittens mit reduziertem Druck am Messerschlitten an, um den Messerschlitten mit geringem Druck gegen das Stangenmaterial zu pressen. In einer zweiten Phase trifft der Schlagschlitten auf den Messerschlitten auf und führt den Schervorgang aus. Nach dem Abscheren wird der Schlagschlitten zurückgefahren und nimmt dabei die Kolbenstange verzögert und damit den Messerschlitten verzögert wieder zurück in die Ausgangsstellung, sodass das Stangenmaterial zum Abscheren nachgeschoben werden kann.

Es ist Aufgabe der Erfindung, eine Schlagschneidevorrichtung weiter zu verbessern und ein verbessertes Verfahren zu deren Betrieb vorzusehen.

Diese Aufgabe wird mit den Merkmalen des Anspruchs 1 bzw. 10 gelöst.

Vorteilhafte Ausgestaltungen sind Gegenstand von Unteransprüchen.

Zum Trennen von massivem Stangenmaterial kommt bei der aus der WO 2004/078396 A1 bekannten Schlagschneidevorrichtung ein Schlagelement (Hammer) mit einem Hammergewicht bis zu 100 kg zum Einsatz. Sowohl die Beschleunigungseinheit als auch die Hebeeinheit müssen entsprechend ausgelegt sein. Bei der Weiterentwicklung dieser Schlagschneidevorrichtung ist es wünschenswert, sehr hohe Schlagraten zu erzielen, d.h. die Zeit zwischen zwei Schlägen zum Trennen jeweils eines Werkstücks vom Stangenmaterial soll möglichst kurz gehalten werden. Neben der Optimierung der Beschleunigung soll daher auch das Zuführen des Schlagelements zur Übergabeposition der Beschleunigungseinheit durch die Hebeeinheit möglichst schnell erfolgen. Daneben wurde beobachtet, dass es bei Fehleinstellungen bei der Schlagschneidevorrichtung - beispielsweise ist die Schlagenergie der Schlageinheit nach der Beschleunigung zu gering, um das Stangenmaterial vollständig zu trennen - zu einem Zurückprallen des Schlagelements nach dem Schlag kommen kann. Dabei springt der Hammer nach dem Auftreffen auf die bewegliche Matrize in seiner Führung wieder nach oben bis zum Umkehrpunkt der Flugparabel und fällt schwerkraftbedingt wiederum nach unten auf die bewegliche Matrize der Schneideeinheit. Gegebenenfalls kann sich dieser Prellvorgang mehrfach wiederholen. Dadurch ist es nicht unbedingt gewährleistet, dass die Hebeeinheit das Schlagelement von der unteren Position mitnehmen kann, d.h. dass nicht in jedem Fall das Schlagelement auf der Schneideeinheit ruht, wenn die Hebeeinheit den Vorgang zum Rückstellen des Schlagelements bereits eingeleitet hat. Trifft hier die Hebeeinheit in voller Fahrt auf das Schlagelement, das gegebenenfalls auch wieder gerade am Herabfallen ist, so können die durch das Schlagelement auf die Hebeeinheit ausgeübten Schläge auf die Dauer zu einer Beeinträchtigung der Hebeeinheit führen. Im Normalbetrieb, wenn das Schlagelement unten auf der Schneideeinheit ruht, muss die Hebeeinheit von dieser Position nach dem Ankoppeln an das Schlagelement langsam beschleunigt werden, um die Belastung der Hebeeinheit beim Beschleunigen des schweren Schlagelements zu begrenzen. Dies kostet Zeit beim Zustellen des Schlagelements zur Übergabeposition der Beschleunigungseinheit.

Gemäß Anspruch 1 ist eine Schlagschneidevorrichtung mit einer Beschleunigungseinheit zum Beschleunigen eines Schlagelements gegen eine Schneideeinheit vorgesehen, wobei mit der Schneideeinheit Werkstücke getrennt werden können. Insbesondere können mit der Schneideeinheit kurze Werkstücke aus einem in die Schneideeinheit zugeführten Stangenmaterial abgelängt werden. Nach der Beschleunigung des Schlagelements durch die Beschleunigungseinheit wird das Schlagelement von der Beschleunigungseinheit abgekoppelt, bevor das Schlagelement auf eine bewegliche und durch das Schlagelement verschiebbare Matrize der Schneideeinheit auftrifft. Mit einer Rückstelleinrichtung wird das Schlagelement nach dem Ausführen des Schlages auf die Schneideeinheit zu einer Position oder einem Bereich zugestellt, in der die Beschleunigungseinheit das Schlagelement wieder für den nächsten Beschleunigungsvorgang übernehmen kann. Beispielsweise wird in der Übergabeposition oder im Übergabebereich ein Ankoppeln eines Beschleunigungsmitnehmers der Beschleunigungseinheit an das Schlagelement oder einen Aufnehmer des Schlagelements ermöglicht.

Erfindungsgemäß weist die Rückstelleinrichtung eine Verzögerungseinrichtung auf, mit der der Antrieb oder Vortrieb der Antriebseinrichtung, die den Mitnehmer zum Zurückstellen des Schlagelements antreibt, zumindest vorübergehend reduzierbar ist. Insbesondere wird durch die Verzögerungseinrichtung der Antrieb oder Vortrieb verzögert unmittelbar vor dem in-Anlage-kommen des Mitnehmers am Schlagelement oder vor dem in-Eingriff-kommen des Mitnehmers am Schlagelement oder bei Anlage des Mitnehmers am Schlagelement oder mit dem in Eingriffkommen des Mitnehmers am Schlagelement. Das heißt, dass der Mitnehmer entweder bereits verzögert wird, bevor dieser unmittelbar am Schlagelement zur Anlage oder zur Kopplung kommt, und/oder nachdem bereits eine Verbindung bzw. Kopplung zwischen Mitnehmer und Schlagelement hergestellt wurde. Die Verbindung oder Kopplung zwischen dem Schlagelement und dem Mitnehmer kann eine in eine Richtung wirkende Verbindung oder Kopplung sein oder eine in zwei Richtungen wirkende Verbindung oder Kopplung (z.B. Aufwärts- und Abwärtsbewegung).

Die Antriebseinrichtung ist ein Elektromotor.

Eine Dämpfungs- und/oder Federeinrichtung und/oder eine Kupplungseinrichtung die Kupplungseinrichtung ist eine Rutschkupplung und/oder eine elastische Kupplung ist als Verzögerungseinrichtung vorgesehen. Beispielsweise ist die Verzögerungseinrichtung zwischen der Antriebseinrichtung und der Führungseinrichtung, die den Mitnehmer führt, angeordnet. Trifft in diesem Fall der Mitnehmer bei voller Fahrt auf das Schlagelement, das entweder ruht oder eine Relativgeschwindigkeit zum Mitnehmer aufweist, so wird die Verzögerung bzw. Abbremsung des Mitnehmers durch das Schlagelement und damit auch der beweglichen Teile der Führungseinrichtung nicht oder nicht unmittelbar auf die Antriebseinrichtung übertragen. Die Antriebseinrichtung weist beispielsweise einen NC-gesteuerten Motor und ein Getriebe auf, bei denen die Lebensdauer deutlich erhöht ist, wenn die bei der Schlagschneidevorrichtung extrem häufige Wiederholung der Verzögerung mittels der Verzögerungseinrichtung nicht direkt auf die Antriebseinrichtung einwirkt. Gemäß einer Ausgestaltung ist die Dämpfungs- und/oder Federeinrichtung zwischen der Antriebseinrichtung und der Führungseinrichtung und/oder zwischen der Führungseinrichtung und dem Mitnehmer (90) angeordnet und/oder ist Teil der Führungseinrichtung.

Vorteilhaft ist die Rückstelleinrichtung während der Beschleunigung des Schlagelements durch die Beschleunigungseinheit und/oder während der Schlagphase, bei der das Schlagelement auf die Schneideeinheit auftrifft bzw. zu dieser nach der Entkopplung von der Beschleunigungseinheit hinfliegt, ebenfalls von dem Schlagelement entkoppelt.

Durch das Vorsehen der Verzögerungseinrichtung wird es ermöglicht, dass der (Rückstell-)Mitnehmer bereits im bewegten Zustand zu der Position hingefahren wird, in der er am Schlagelement zur Anlage kommt oder mit diesem in Eingriff kommt. Bildlich gesprochen kann der Mitnehmer so das Schlagelement bei voller Fahrt aufnehmen bzw. an dieses ankoppeln. Die Verzögerungseinrichtung, die zumindest vorübergehend ein Abbremsen bzw. eine Umkehr der Fahrt des Mitnehmers ermöglicht, verhindert eine kurzfristige, extreme Beschleunigung des Schlagelements durch den Mitnehmer. Dabei ist der Aufprallimpuls zwischen Mitnehmer und Schlagelement durch die Verzögerung deutlich reduziert. Aufgrund der verringerten Schlagstärke beim Aufprall zwischen Mitnehmer und Schlagelement ist die Belastung bzw. Beanspruchung der Rückstelleinrichtung bzw. der Führung für das Schlagelement erheblich reduziert und somit ist die Standzeit der Schlagschneidevorrichtung insgesamt verlängert.

Im Idealfall wird das Schlagelement beim Auftreffen auf die bewegliche Matrize der Schneideeinheit schlagartig abgebremst durch Absorption überschüssiger Schlagenergie. Dabei hat das Schlagelement nach der Beschleunigung durch die Beschleunigungseinheit in der Regel mehr Energie als zur Trennung des Stangenmaterials nötig ist. Diese Überschussenergie (bzw. der überschüssige Impuls) wird durch Dämpfung mittels einer Dämpfungseinrichtung absorbiert, so dass das Schlagelement am Ende der Schlagphase zum Stehen kommt. In diesem Fall kann das Anfahren und Zustellen des Mitnehmers zum auf der Schneideeinheit ruhenden Schlagelement so gesteuert werden, dass Bruchteile nach dem Schlag der Mitnehmer bereits am Schlagelement zur Anlage kommt (oder dass eine Kopplung zwischen Mitnehmer und Schlagelement zustande kommt oder der Mitnehmer am Schlagelement zum Eingriff kommt). Die Beschleunigung des Schlagelements in Richtung Übergabebereich bzw. Übergabeposition erfolgt somit umgehend, wodurch aufgrund der Verzögerungseinrichtung die anfängliche Beschleunigung des Schlagelements durch den Mitnehmer vermindert ist.

Liegt andererseits nicht dieser Idealfall vor, also beispielsweise wenn das Schlagelement von der beweglichen Matrize zurückprellt (beispielsweise war die Schlagenergie zu gering, um das Stangenmaterial vollständig zu trennen) und das Schlagelement sich entgegen der ursprünglichen Beschleunigungsrichtung wegbewegt, so kann das Schlagelement durch den bereits 'hinterherfahrenden' Mitnehmer im Fluge eingefangen und von der gegenüber der Schneideeinheit beabstandeten Position dann zu der Übergabeposition oder dem Übergabebereich zugeführt werden. Auch in diesem Fall erfolgt das Zustellen des Schlagelements zur Übergabeposition oder zum Übergabebereich durch den bereits in Fahrt befindlichen Mitnehmer sehr schnell und der Stoß bzw. Schlag zwischen Mitnehmer und Schlagelement ist aufgrund der 'dämpfenden' Wirkung der Verzögerungseinrichtung (Relativgeschwindigkeit wird durch die Verzögerungseinrichtung vermindert - zumindest hinsichtlich der Antriebseinheit) reduziert.

Die Führungseinrichtung führt den Mitnehmer, d.h. der Mitnehmer ist an der Führungseinrichtung gelagert und wird durch diese geführt. Vorteilhaft verbindet die Führungseinrichtung den Mitnehmer mit der Antriebseinrichtung, so dass die Bewegung der Antriebseinrichtung mittels der Führungseinrichtung auf den Mitnehmer übertragen wird. Vorteilhaft verläuft die Führungseinrichtung zumindest über einen Teilbereich parallel zur Führung des Schlagelements, so dass das Schlagelement durch den Mitnehmer über eine entsprechende Strecke zum Zustellen zur Übergabeposition oder zum Übergabebereich mitgeführt werden kann. In Ausgestaltung weist die Führungseinrichtung ein umlaufendes Element auf, insbesondere eine Kette, ein Band oder ein Seil. Vorzugsweise ist das umlaufende Element mittels einer Spanneinrichtung (82) vorgespannt, insbesondere mittels eines Spannrades.

Die Antriebseinrichtung ist ein Elektromotor, vorzugsweise ein NCgesteuerter Elektromotor, bei dem vorzugsweise mittels einer Steuereinrichtung der zeitliche Ablauf des Startens des Mitnehmers von dessen Startposition und die Rückführung des Mitnehmers zu seiner Startposition synchronisierbar ist mit der zeitlichen Steuerung der Beschleunigungseinheit und/oder dem Aufprallzeitpunkt des Aufpralls des Schlagelements auf der Schneideeinheit.

Vorteilhaft ist die Verzögerungseinrichtung im Abtriebsstrang zwischen Antriebseinrichtung und Mitnehmer angeordnet, also z.B. Teil der Führungseinrichtung, Teil des Mitnehmers, als Kopplungselement zwischen Antriebseinrichtung und Führungseinrichtung ausgebildet und/oder als Verbindungselement zwischen Führungseinrichtung und Mitnehmer ausgebildet. Die mechanisch wirkende Verzögerungseinheit 'verbindet' die Antriebseinheit mit dem Mitnehmer also in dem Sinne, dass in der Antriebsverbindung die Antriebskraft zumindest in einem Teilelement nicht in voller Stärke (nur reduziert oder zeitweise gar nicht) weiterübertragen wird. Die Antriebsenergie kann in der Antriebsverbindung zwischengespeichert werden (ganz oder teilweise z.B. durch elastische oder Federelemente). Vorteilhaft wird aber zumindest ein Teil der Antriebsenergie in der Antriebsverbindung abgeleitet (also nicht vollständig von der Antriebseinheit auf den Mitnehmer übertragen), beispielsweise in Form von Wärmeenergie abgeleitet.

Die Wirkungsweise der Verzögerungseinrichtung kann auf rein elektronischer Steuerung beruhen, kann durch eine rein mechanische Ausgestaltung der Verzögerungseinrichtung realisiert sein oder eine Kombination von mechanischer Verzögerung und elektronisch gesteuerter Verzögerung sein.

In vorteilhafter Ausgestaltung weist die Dämpfungs- und/oder Federeinrichtung zumindest ein Dämpfungselement, insbesondere einen Dämpfungskolben mit Zylinder, und zumindest ein Federelement auf. Dabei weist beispielsweise die Dämpfungs-und/oder Federeinrichtung zumindest einen Hydraulikdämpfer aufweist oder ist ein Hydraulikdämpfer.

Vorteilhaft kommt zumindest eine (solche) Dämpfungs- und/oder Federeinrichtung zum Einsatz, wobei mittels der Dämpfungseinrichtung die Verzögerung des Mitnehmers durch das Schlagelement gedämpft auf die Führungseinrichtung und/oder die Antriebseinrichtung übertragen wird. Ist die Verzögerung ausreichend gedämpft (beispielsweise ist die Auslenkung der Dämpfungseinrichtung ausreichend groß), um die Verzögerung zu kompensieren, so erfolgt vorteilhaft die Rückstellung der Dämpfungseinrichtung in die Ausgangsstellung mittels einer Federeinrichtung, die während des Dämpfungsvorgangs gespannt wurde. Kommt dagegen oder zusätzlich eine Kupplungseinrichtung zum Einsatz, so wird zur Dämpfung der Relativgeschwindigkeit zwischen Mitnehmer und Schlagelement beispielsweise ein Schlupf der Kupplung zwischen Mitnehmer und Führungseinrichtung und/oder zwischen Führungseinrichtung und Antriebseinrichtung zugelassen. Tritt in der Kupplungseinrichtung der Schlupf gegen die Wirkung einer Reibungskraft auf, so erfolgt auch hier wiederum eine Dämpfung und eine Kraftübertragung zwischen Antriebseinrichtung und Mitnehmer, die aufgrund der Kopplung oder Verbindung zwischen Mitnehmer und Schlagelement das Schlagelement beschleunigt. Sobald die Geschwindigkeit bzw. Beschleunigung des Schlagelements mit dem durch die Antriebseinrichtung vorgegeben Antrieb oder Vortrieb übereinstimmt, greift die Kupplungseinrichtung wieder und der Antrieb des Schlagelements bzw. Mitnehmers durch die Antriebseinrichtung erfolgt ohne Schlupf in der Kupplung.

Da die Schlag- und Wiederholungsrate bei der Schlagschneidevorrichtung sehr hoch ist (es wird 1 Schlag pro Sekunde angestrebt), weist vorteilhaft die Verzögerungseinrichtung eine Kühleinrichtung auf, die beispielsweise von der Dämpfungseinrichtung und/oder der Kupplungseinrichtung die Dämpfungs- oder Reibungswärme abführt. Eine Kühlungseinrichtung ist beispielsweise ein Kühlkörper oder eine Fluideinrichtung, bei der ein Kühlmedium an die Dämpfungseinrichtung und/oder die Kupplungseinrichtung geführt wird.

Sind bei einer Ausgestaltung zwei hintereinander geschaltete Dämpfungs- und/oder Federanordnungen vorgesehen, insbesondere an einem Antriebsrad der Führungseinrichtung, so kann der bei der Verzögerung zwischen Mitnehmer und Antriebseinrichtung auftretende Auslenkungsweg bzw. Auslenkungswinkel zwischen den beiden hintereinander geschalteten Dämpfungs- und/oder Federanordnungen aufgeteilt werden. Wenn insbesondere ein Dämpfungskolben dem Antriebsrad zugeordnet ist, so kann durch Verwendung von zwei hintereinander geschalteten Dämpfungskolben der Auslenkungsweg bzw. -hub auf die beiden Kolben aufgeteilt werden, so dass auch bei kompakter Bauweise der Auslenkungshub des Kolbens in einen ausreichend großen Drehhub des Antriebsrades gegenüber einer Antriebswelle umgesetzt werden kann.

Für die rein elektronische Verzögerung des Mitnehmers bzw. eine ergänzende, elektronische Verzögerung des Mitnehmers wird eine Erfassungseinrichtung vorgesehen, mittels der der Kontakt des Mitnehmers zum Schlagelement bzw. das Eingreifen des Mitnehmers am Schlagelement erfassbar ist. Zusätzlich oder alternativ ist mittels der Erfassungseinrichtung die Annäherung des Mitnehmers an das Schlagelement erfassbar. Zusätzlich oder alternativ ist mittels der Erfassungseinrichtung die bereits wirkende Verzögerung des Mitnehmers gegenüber der Antriebseinrichtung aufgrund des Wirksamwerdens der mechanischen Verzögerung erfassbar. Beispielsweise ist mittels der Erfassungseinrichtung der Kontakt zwischen dem Mitnehmer und dem Schlagelement und/oder eine Annäherung des Mitnehmers an das Schlagelement erfassbar. Dabei ist in Ausgestaltung die Antriebseinrichtung mittels der Steuereinrichtung ansteuerbar, der Steuereinrichtung ein Signal der Erfassungseinrichtung zuführbar und die Steuereinrichtung reduziert oder kehrt den Antrieb oder Vortrieb des Mitnehmers (90) in Abhängigkeit des Signals von der Erfassungseinrichtung um.

Vorteilhaft wird das Signal der Erfassungseinrichtung einer Steuereinrichtung zum Ansteuern der Antriebseinrichtung zugeführt, so dass beim Erfassen eines vorgegebenen Signals, eines vorgegebenen Signalbereichs, bei Überschreiten eines Signalwerts und/oder dergleichen die Steuereinrichtung die Antriebseinrichtung derart ansteuert, dass der von der Antriebseinrichtung auf den Mitnehmer ausgeübte Antrieb oder Vortrieb reduziert oder sogar umgekehrt wird.

Wird beispielsweise mittels der Erfassungseinrichtung erfasst, dass sich der Mitnehmer dem Schlagelement annähert, so kann die Relativgeschwindigkeit des Mitnehmers gegenüber dem Schlagelement durch Verlangsamen oder Umkehren des Antriebs der Antriebseinrichtung reduziert werden. Vorzugsweise wird die Relativgeschwindigkeit des Mitnehmers soweit herabgesetzt, dass der Impuls, der vom Schlagelement über den Mitnehmer auf die Führungseinrichtung und die Antriebseinrichtung übertragen wird, stark reduziert ist. In Ausgestaltung wird beispielsweise mittels einer Erfassungseinrichtung eine Verzögerung zwischen der Antriebseinrichtung und dem Mitnehmer erfasst, wenn der Mitnehmer durch eine Antriebseinrichtung angetrieben wird.

Nachdem dann der Mitnehmer am Schlagelement angreift bzw. dort anliegt oder mit diesem in Eingriff kommt, wird vorzugsweise der Mitnehmer durch Erhöhung des Vortriebs der Antriebseinrichtung wieder beschleunigt, so dass auch das Schlagelement mit erhöhter Geschwindigkeit in die Übergabeposition oder den Übergabebereich der Beschleunigungseinheit zugestellt werden kann.

Zur (elektronischen, die z.B. die mechanische Verzögerung unterstützt) Reduzierung des Antriebs oder Vortriebs des Mitnehmers durch Einwirken der Steuereinrichtung auf die Antriebseinrichtung kann anstelle der Erfassung oder zusätzlich zur Erfassung der Annäherung des Mitnehmers an das Schlagelement auch das in-Kontaktkommen des Mitnehmers mit dem Schlagelement erfasst werden. Beispielsweise weist die Erfassungseinrichtung einen Kontaktgeber auf, der elektrisch oder durch Druckerfassung eine Berührung zwischen Mitnehmer und Schlagelement feststellt.

Bei einer alternativen oder ergänzenden, bevorzugten Ausgestaltung wird mittels der Erfassungseinrichtung die bereits wirkende, mechanische Verzögerung zwischen Mitnehmer und Führungseinrichtung und/oder zwischen Führungseinrichtung und der Antriebseinrichtung erfasst, so dass beispielsweise anstelle eines Kontaktgebers implizit auf das in-Eingriffkommen oder des Mitnehmers am Schlagelement oder auf das Anliegen des Mitnehmers am Schlagelement geschlossen wird. Beispielsweise weist der Mitnehmer und/oder die Führungseinrichtung einen Positionsgeber auf, mit dem festgestellt werden kann, ob die Position des Mitnehmers und/oder eines sich bewegenden Teils der Führungseinrichtung mit der zu erwartenden Positionsänderung übereinstimmt, die aufgrund des Antriebs oder Vortriebs durch die Antriebseinrichtung vorliegen müsste. Weicht die aktuelle Position gegenüber der zu erwartenden Position ab, so kann auf das Wirksamwerden der mechanischen Verzögerung geschlossen werden. In Ausgestaltung weist die Erfassungseinrichtung einen Positionsgeber, einen Drehgeber, einen Kontaktsensor und/oder einen Näherungssensor auf.

Wird das Wirksamwerden der mechanischen Verzögerung erfasst, so kann zur Unterstützung der mechanischen Verzögerung ebenfalls die oben bereits beschriebene, elektronische Verzögerung zum Einsatz kommen, bei der mittels einer Steuereinrichtung der Vortrieb oder Antrieb der Antriebseinrichtung reduziert wird. Dadurch ist die mechanische Belastung der mechanischen Verzögerungseinrichtung weiter reduziert.

Eine Erfassungseinrichtung zur Erfassung der mechanischen Verzögerung kann in Ausgestaltung zusätzlich oder alternativ der mechanischen Verzögerungseinrichtung zugeordnet sein, beispielsweise der Dämpfungs- und/oder Federeinrichtung und/oder der Kupplungseinrichtung.

In weiterer Ausgestaltung ist vorgesehen, dass bei Erfassung der Rückstellung der mechanischen Auslenkung, beispielsweise mittels des Positionsgebers, erfasst wird, wann die maximale mechanische Auslenkung der mechanischen Verzögerungseinrichtung (Dämpfungs- und/oder Federeinrichtung) erfolgt ist und eine Umkehr bzw. Rückstellung der mechanischen Auslenkung erfolgt. Beispielsweise wird mittels eines Positionsgebers festgestellt, dass der aufgrund der Wirkung der mechanischen Verzögerungseinrichtung ausgelenkte Mitnehmer gegenüber seiner durch die Antriebseinheit vorgegebenen Sollposition wieder aufholt. In diesem Fall kann dann der Mitnehmer und damit das Schlagelement durch die Antriebseinrichtung wieder stärker beschleunigt werden, so dass insgesamt die Zeit zur Zurückstellung des Schlagelements zur Übergabeposition oder zum Übergabebereich verkürzt wird.

Gemäß dem Verfahren wird eine Schlagschneidevorrichtung so betrieben, dass nach dem Ausführen eines Schlages des entkoppelten Schlagelements auf eine Schneideeinheit ein bereits in Bewegung befindlicher Mitnehmer beim Zustellen vom Schlagelement abgebremst und die Relativgeschwindigkeit zwischen Schlagelement und Mitnehmer reduziert wird.

Wie oben ausgeführt, kann das Schlagelement nach der Ausführung des Schlages auf der Schneideeinheit aufliegen oder durch Zurückprellen von der Schneideeinheit sich von dieser entfernen oder sich bei einem Parabelflug nach dem Prellen wieder in Richtung Schneideeinheit zurückbewegen. Die Verzögerung des in Bewegung befindlichen Mitnehmers kann bereits unmittelbar vor dem Kontakt zwischen Mitnehmer und Schlagelement erfolgen, mit dem In-Kontakt-Kommen oder unmittelbar nach dem In-Kontakt-Kommen.

Vorteilhaft wird, wie oben beschrieben, die Verzögerung entweder auf mechanische Weise herbeigeführt, indem beispielsweise zwischen einer Antriebseinrichtung zum Antreiben des Mitnehmers und dem Mitnehmer eine Dämpfungseinrichtung eine Federeinrichtung und/oder eine Kupplungseinrichtung wirkt. Oder die Verzögerung wird durch einen entsprechenden Betrieb der Antriebseinrichtung herbeigeführt. Besonders vorteilhaft werden die mechanische und die elektrische Verzögerung bzw. gesteuerte Verzögerung durch die Antriebseinrichtung miteinander kombiniert.

Besonders vorteilhaft wird die Verzögerung unabhängig davon bewirkt, ob das Schlagelement auf der Schneideeinheit aufliegt, oder, wie beschrieben, nach dem Zurückprellen von der Schneideeinheit beabstandet ist. Beispielsweise kann die Vorrichtung so betrieben oder angesteuert werden, dass der Mitnehmer das Schlagelement von einer Position zur Übergabeposition oder zum Übergabebereich zurückführt oder zurückführen kann, in der das Schlagelement auf der Schneideeinheit aufliegt. In alternativer Ausgestaltung führt der Mitnehmer oder kann der Mitnehmer das Schlagelement von einer Position zur Übergabeposition oder zum Übergabebereich zurück, in der das Schlagelement von der Schneideeinheit beabstandet ist, insbesondere von einer Flugbahnposition, bei der das Schlagelement nach dem Aufschlag auf die Schneideeinheit von der Schneideeinheit wegfliegt.

Ganz besonders vorteilhaft ist der zeitliche Verlauf des Verfahrens (der Bewegung) des Mitnehmers zur Übergabeposition oder zum Übergabebereich so eingestellt ist, dass der Mitnehmer das Schlagelement im aufsteigenden Zweig seiner Flugparabel nach dem Schlag im Falle eines Zurückprallens des Schlagelements von der Schneideeinheit einfängt, wobei insbesondere Startstellung, Startzeit, Beschleunigung und/oder Geschwindigkeit des Mitnehmers auf den Zeitpunkt des Aufschlages des Schlagelements auf die Schneideeinheit abgestimmt ist/sind.

Ganz besonders vorteilhaft wird das Schlagelement durch den Mitnehmer derart im 'freien' Flug nach einem Zurückprellen eingefangen, dass sich das Schlagelement beim Herstellen des Kontakts zwischen Mitnehmer und Schlagelement noch von der Schneideeinheit entfernt. In diesem Fall ist die Relativgeschwindigkeit zwischen Mitnehmer und Schlagelement von vorneherein geringer als wenn das Schlagelement nach dem Zurückprellen bereits wieder in Richtung Schneideeinheit herunterfällt. (In diesem Fall wird vorausgesetzt, dass die Schwerkraft auf das Schlagelement wirkt und dieses nach dem Aufsteigen nach dem Zurückprellen wieder in Richtung Schneideeinheit zurückfällt oder zurücksinkt).

Die obigen Ausgestaltungen der Schlagschneidevorrichtung und deren Betriebsweise gelten für die Ausgestaltung oder die Erläuterung des Verfahrens nach Anspruch 12 entsprechend.

So wird bei einer Ausgestaltung des Verfahrens die Verzögerung durch die Wirkung der Verzögerungseinrichtung herbeigeführt, wobei insbesondere zwischen der Antriebseinrichtung und dem Mitnehmer die Verzögerungseinrichtung angeordnet ist und/oder wobei insbesondere die Verzögerungseinrichtung den Mitnehmer mit der Antriebseinrichtung verbindet(siehe Ausgestaltungen oben).

Anhand von Figuren werden vorteilhafte Ausführungsbeispiele der Erfindung näher erläutert. Es zeigen:
- Fig. 1: die Vorderansicht einer Schlagschneidemaschine;
- Fig. 2: einen vergrößerten Teilausschnitt der Schlagschneidemaschine von Fig. 1;
- Fig. 3: den Antriebsstrang eines Rückholers der Schlagschneidemaschine von Fig. 1 in teilweiser Querschnittsansicht;
- Fig. 4: eine vergrößerte Teildarstellung des Rückholers in Vorderansicht;
- Fig. 5: eine vergrößerte Querschnittsansicht einer Verzögerungseinheit des Rückholers;
- Fig. 6-10D: verschiedene Teilansichten, perspektivische Ansichten und Seitenansichten der Verzögerungseinheit von Fig. 5;
- Fig. 11: ein Zeitdiagramm für die Flugbahn eines Hammers und des Fahrwegs eines Rückstellmitnehmers der Schlagschneidemaschine; und
- Fig. 12: ein vereinfachtes Blockschaltbild der Steuerung der Schlagschneidemaschine.

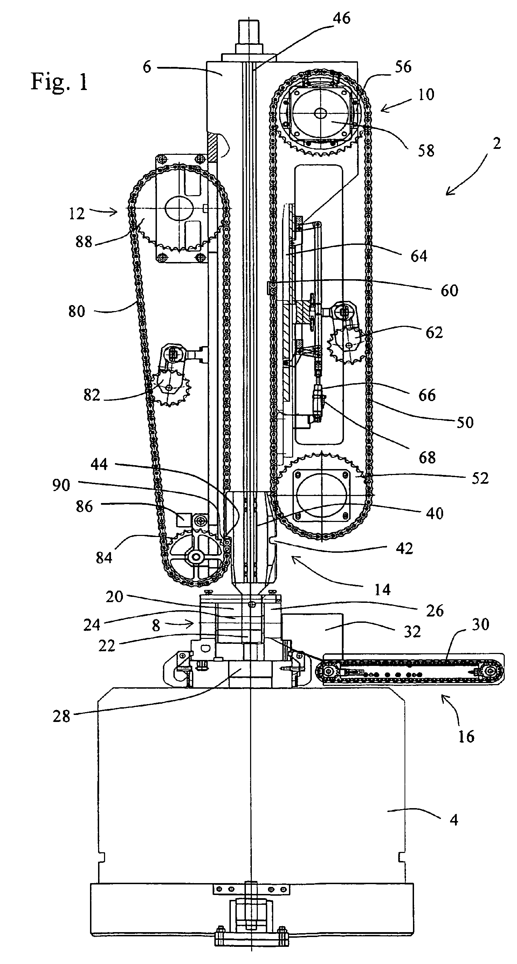

Fig. 1 zeigt eine Vorderansicht einer Schlagschneidemaschine 2. An einem Amboss bzw. Maschinensockel 4 der Schlagschneidemaschine 2 ist ein Vertikalständer 6 befestigt. An dem Vertikalständer 6 sind ein Beschleunigungsaggregat 10 und ein Rückholer 12 montiert. Mit dem Beschleunigungsaggregat 10 ist ein Hammer 40 einer Hammereinheit 14 gegen eine auf dem Amboss 4 gelagerte Schneideeinheit 8 beschleunigbar. Mittels des Rückholers 12 ist der Hammer 40 zu einem Übergabebereich des Beschleunigungsaggregats 10 zu- bzw. zurückstellbar.

Die Schlagschneidemaschine 2 wird zum adiabatischen Trennen von Stangenmaterial verwendet, wobei das Stangenmaterial, beispielsweise ein Stahlrohr oder eine Metallstange, von der linken Seite her in einen Durchgang 24 der Schneideeinheit 8 zugeführt wird. Nach der Ausführung eines Schlags durch den Hammer 40 auf eine bewegliche Matrize 22 der Schneideeinheit 8 und der Rückstellung der beweglichen Matrize 22 wird das Stangenmaterial wieder eine vorgegebene Länge (nach rechts) weitertransportiert, so dass vom Stangenmaterial durch das Ausüben eines erneuten Schlags vom Hammer 40 auf die bewegliche Matrize 22 und durch das Verschieben der beweglichen Matrize 22 gegen eine starre Matrize 20 der Schneideeinheit erneut ein Werkstück bzw. ein Rohling der vorgegebenen Länge vom Stangenmaterial abgeschnitten wird. Das abgeschnittene Stück des Stangenmaterials fällt nach rechts aus dem Durchgang 24 der Schneideeinheit 8, rutscht über eine Rampe auf ein Transportband 30 und wird durch das Transportband 30 zu einem Transportbehälter oder zu einer Weiterverarbeitungseinrichtung (nicht dargestellt) weitertransportiert.

Dem Transportband 30 ist ein Selektorelement 32 zugeordnet. Mit dem Selektorelement 32 werden abgeschnittene Stücke des Stangenmaterials aussortiert, d.h. vom Transportband 30 weggeführt und in einen Ausschussbehälter umgeleitet. Die aussortierten Stücke weisen nicht die vorgegebene Länge oder nicht die gewünschte Form auf. Im Normalfall ist dies der Anschnitt des Stangenmaterials, bei dem die Stirnseite des Stangenmaterials aufgrund von Stößen oder Transportschäden nicht gleichmäßig eben ist. Weiterhin tritt ein Ausschuss vom Stangenmaterial dann auf, wenn das letzte abgetrennte Stück nicht die vorgegebene Länge aufweist oder die Restlänge des Stangenmaterials nicht mehr ausreichend ist, um ein sauberes Trennen des restlichen Stangenmaterials mit ausreichenden Restlängen sowohl in der starren als auch in der beweglichen Matrize 20, 22 zu gewährleisten.

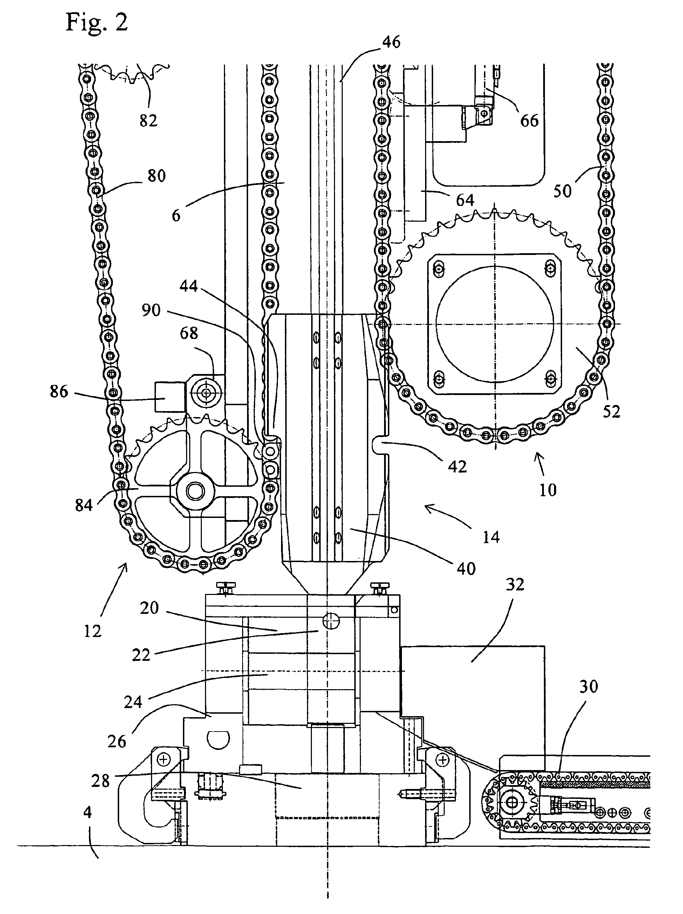

In der Teildarstellung der Schlagschneidemaschine 2 von Fig. 2 ist die Schneideeinheit 8 vergrößert dargestellt. Wie zu erkennen ist, sind in einem Grundblock 26 die starre Matrize 20 und die bewegliche bzw. nach unten verschiebbare Matrize 22 gefasst. Das Stangenmaterial ist hier nicht dargestellt, verläuft aber zum Schlagschneiden durch den Durchgang 24, der sich sowohl durch die starre als auch die bewegliche Matrize 20, 22 erstreckt. Die in Fig. 2 dargestellte Stellung zeigt die Schneideeinheit 8 nach dem Ausführen des Schlags, dem Auswerfen des abgelängt Stangenmaterials und dem Rückstellen der beweglichen Matrize 22 in ihre Grundposition. In der Grundposition fluchten die Durchgänge in den Matrizen 20, 22 zueinander, so dass das Stangenmaterial von links her nach rechts weitergeschoben werden kann, um das neue Stück mit der vorgegebenen Länge vom Stangenmaterial abzutrennen. Unterhalb der beweglichen Matrize 22 ist eine Dämpfungs-/Rückstelleinrichtung 28 angeordnet, mit der einerseits überschüssige Schlagenergie durch Dämpfung absorbiert und in Wärme umgewandelt wird. Andererseits wird mittels der Rückstelleinrichtung die durch das Ausführen des Schlages nach unten versetzte, bewegliche Matrize 22 in die in Fig. 2 gezeigte Grundstellung zurückgestellt.

Wie aus Fig. 2 ersichtlich weist der Hammer auf der rechten Seite eine Ausnehmung 42 auf, in die während der Beschleunigungsphase ein Mitnehmer 60 des Beschleunigungsaggregats 10 eingreift. Der Hammer 40 wird durch eine Führung 46 geführt, wobei zwischen der Führung und dem Hammer Dämpfungselemente und Gleitelemente angeordnet sind, die ein Gleiten des Hammers entlang der vertikalen Führung 46 ermöglichen und während des Schlags eine Erschütterung der Führung 46 durch den Hammer 40 weitgehend dämpfen. Auf der linken Seite des Hammers 40 ist ein Anschlag 44 mit einem Vorsprung angeordnet. Zur Zurückstellung des Hammers 40 zur Übergabeposition bzw. zum Übergabebereich des Beschleunigungsaggregats 10 kommt ein Rückstellmitnehmer 90 des Rückholers 12 am Anschlag 44 zur Anlage. Durch das Aufwärtsfahren des Rückstellmitnehmers 90 wird dann der Hammer nach oben befördert.

Wie bereits erwähnt, zeigt Fig. 2 die Schlagschneidemaschine 2 in einer Momentaufnahme, bei der der Hammer 40 auf der beweglichen Matrize 22 ruht, nachdem der Schlag ausgeführt und die bewegliche Matrize 22 wieder in ihre Grundstellung zurückgestellt wurde. Das Beschleunigungsaggregat 10 hat in der Phase zwischen der Entkopplung vom Hammer, dem Aufschlag des Hammers auf die bewegliche Matrize 22 und der Rückstellung in die Grundstellung der beweglichen Matrize 22 bereits die aus der Fig. 1 ersichtliche Stellung eingenommen. In Fig. 1 ist der Mitnehmer 60 in die Übergabeposition zurückgeführt, bei der dann die Übergabe des Hammers 40 vom Rückholer 12 zum Beschleunigungsaggregat 10 erfolgt. In der Momentaufnahme von Fig. 2 bewegt sich der Rückstellmitnehmer 90 des Rückholers 12 bereits mit ca. 2 m/s nach oben, so dass der Zeitpunkt kurz vor dem Anschlagen des Rückstellmitnehmers 90 am Anschlag 44 des Hammers 40 dargestellt ist.

Wie sich der Fig. 1 und 2 entnehmen lässt, ist der Mitnehmer 60 des Beschleunigungsaggregats 10 an einer Kette befestigt, wobei der Mitnehmer 60 ein hervorspringendes Kettenglied ist, das in die Ausnehmung 42 des Hammers 40 eingreifen kann. Die Kette 50 wird am unteren Umkehrpunkt durch ein Umlenkrad 52 umgelenkt und am oberen Umkehrpunkt durch ein Antriebsrad 56 angetrieben. Das Antriebsrad 56 ist durch eine Welle mit einem Antriebsmotor 58 verbunden, der vom Antriebsrad 56 her gesehen nach vorne baut. An der linken Seite des Beschleunigungsaggregats 10 ist ein optionaler Kettenspanner 62 angeordnet, der einerseits die Kette gespannt hält und andererseits Kettenausschläge beim Beschleunigen oder Abbremsen dämpft und damit begrenzt. Rechts vom linken Kettenverlauf ist eine Kettenführung 64 angeordnet, die in der Beschleunigungsphase zur Beschleunigung des Hammers 40 von der Übergabeposition in Richtung Schneideeinheit 8 nahe an die Kette 50 zugestellt ist. Dadurch und aufgrund der vertikalen Länge der Kettenführung 64 wird in der Beschleunigungsphase verhindert, dass die Kette nach rechts ausgelenkt wird. Dies verhindert wiederum, dass der Mitnehmer 60 aus der Ausnehmung 40 des Hammers 40 herausspringt.

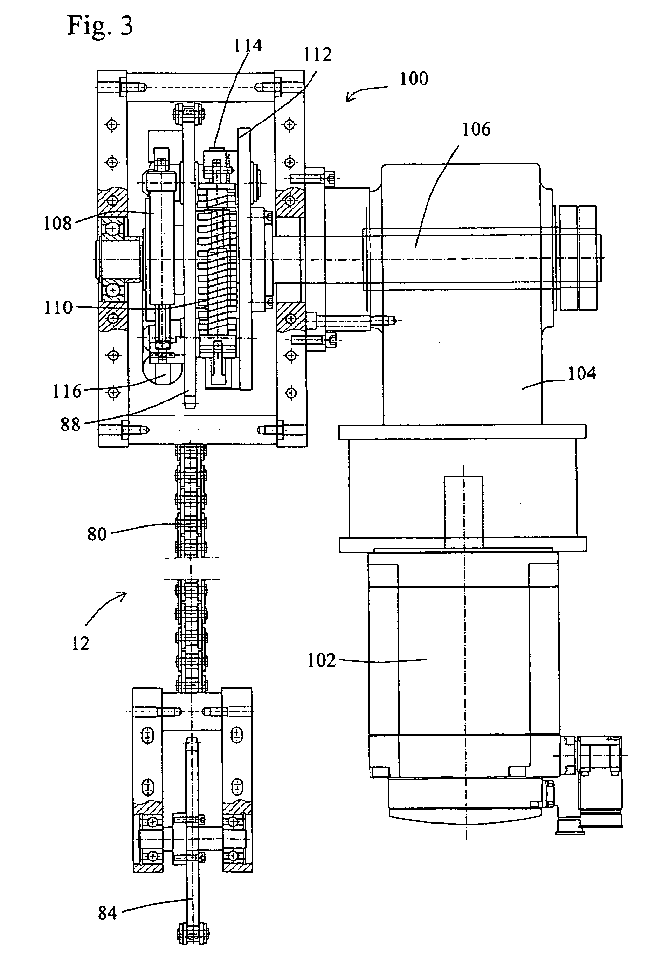

Der Aufbau des Rückholers 12 ist wie folgt: Der bereits beschriebene Rückstellmitnehmer 90, der mit dem Anschlag 44 des Hammers 40 in Kontakt kommt, ist an einer Führungskette 80 angeordnet. Ähnlich dem Mitnehmer 60 an der Kette 50 ist der Rückstellmitnehmer 90 ein verbreitetes Kettenglied der Führungskette 80. Die Kette 80 wird am unteren Umkehrpunkt durch ein Umlenkrad 84 umgelenkt und am oberen Ende durch ein Antriebsrad 88 angetrieben. Das Antriebsrad 88 und dessen Antrieb sind ab Fig. 3 im Detail weiter beschrieben. Die Führungskette 80 ist über einen Kettenspanner 82 geführt, der ähnlich wie der Kettenspanner 62 beim Beschleunigen und Abbremsen sowie beim schnellen Verfahren der Führungskette 80 deren Ausschläge begrenzt und dämpft. Weiterhin wird durch den Kettenspanner 82 die Kette unter Spannung gehalten. Dem unteren Umlenkrad 84 ist ein Drehsensor 86 zugeordnet, mit dem die Drehung bzw. Drehgeschwindigkeit des Umlenkrads 84 und damit der Führungskette 80 erfasst wird. Wie sich Fig. 1 entnehmen lässt, ist zumindest über einen weiten Bereich der Rückstellmitnehmer 90 parallel zum Mitnehmer 60 verfahrbar, so dass in diesem Parallelbereich prinzipiell an jeder Position eine Übergabe möglich ist.

Wie erwähnt, findet die Übergabe des Hammers 40 vom Rückholer 12 zum Beschleunigungsaggregat 10 in der Höhe statt, in der sich bei der Momentaufnahme von Fig. 1 der Mitnehmer 60 befindet. Dazu hebt der Rückholer 12 den Hammer 40 mittels des Rückstellmitnehmers 90 von seiner unteren Position soweit an, bis die Ausnehmung 42 am Hammer in Höhe des Mitnehmers 60 ist. Bei dem Rückholvorgang ist die Kettenführung 64 nach rechts zurückgesetzt (Fig. 1 zeigt dies für den oberen Teil von 64), so dass durch die seitliche Rampe, die am Hammer rechts und von oben her gesehen vor der Ausnehmung 42 angeordnet ist, der Mitnehmer 60 über die Rampe gleiten kann und dadurch aufgrund der zurückgesetzten Kettenführung 64 die Kette nach rechts auslenken kann. Wurde somit der Hammer 40 soweit angehoben, bis die Ausnehmung 42 dem Mitnehmer 60 gegenüberliegt, so wird die Kettenführung 64 durch Betätigung eines Betätigungselements 66 wieder nach links ausgelenkt (wie dies in Fig. 1 für den unteren Teil von 64 dargestellt ist) und der Mitnehmer 60 gleitet in die Ausnehmung 42 (soweit dies nicht ohnehin schon aufgrund der Kettenspannung erfolgt ist).

Das Zustellen der Kettenführung 64 nach links zur Kette und das Zurückziehen erfolgt mittels des Betätigungselements 66, das über ein Hebelgestänge während der Betätigung einen Parallelversatz der vertikalen Führungsfläche der Kettenführung 64 zur Kette 50 bewirkt. Dem Betätigungselement 66 bzw. der Kettenführung 64 ist ein Stellungssensor 68 zugeordnet, mit dem erfasst wird, ob die Kettenführung 64 durch die Verstellung mittels des Betätigungselements 66 die linke Endstellung an der Kette tatsächlich erreicht. Wird mit dem Stellungssensor 68 festgestellt, dass die Endstellung erreicht ist, so ist gewährleistet, dass der Mitnehmer 60 ausreichend in die Ausnehmung 42 eingefügt ist. Meldet der Stellungssensor 68 nach der Betätigung nicht das Erreichen der Endstellung, so liegt ein Fehler vor (beispielsweise ist der Mitnehmer 60 nicht ordnungsgemäß in die Ausnehmung 42 eingeführt) und der Betrieb der Schlagschneidemaschine 2 wird zur Fehlerbehebung unterbrochen.

Nachdem nun der Mitnehmer 60 in die Ausnehmung 42 eingegriffen hat, kann mittels des Beschleunigungsaggregats 10 die Beschleunigung des Hammers 40 aus der Übergabeposition erfolgen. Oder, falls beispielsweise eine höhere oder niedrigere Beschleunigung erforderlich ist, wird der Hammer 40 zunächst in eine höhere Position durch das Nachobenziehen der Kette 50 angehoben oder durch das Nachuntenfahren der Kette 50 in eine tiefere Startposition bzw. Ausgangsposition gebracht. Aus Zeitgründen ist es jedoch vorteilhaft, wenn der Beginn der Beschleunigung unmittelbar in der Position beginnt, in der die Übergabe stattgefunden hat. Bzw. die Übergabeposition ist so festgelegt, dass die Übergabeposition die Beschleunigungsstartposition ist.

Bevor nun die Beschleunigung des Hammers 40 durch das Beschleunigungsaggregat 10 erfolgt, wird der Rückstellmitnehmer 90 durch Antreiben der Führungskette 80 nach unten bewegt, so dass der Rückstellmitnehmer 90 während der Beschleunigung des Hammers durch das Beschleunigungsaggregat 10 nicht mehr am Anschlag 44 anliegt. Um auch hier wieder die Schlagrate zu erhöhen bzw. zur Verkürzung der Zykluszeit, beginnt die Beschleunigung des Hammers 40 noch während der Rückstellmitnehmer 90 nach unten in seine untere Umkehrposition bewegt wird. Es muss daher nicht abgewartet werden, bis der Rückstellmitnehmer 90 des Rückholers 12 seine Endposition erreicht hat.

Beim Zurückfahren des Rückstellmitnehmers 90 wird jedoch in jedem Fall gewährleistet, dass der Rückstellmitnehmer 90 soweit vom Anschlag 44 des Hammers 40 entfernt ist, dass auch während der Ausführung des Schlages vom Hammer auf die bewegliche Matrize 22 kein Kontakt zwischen Anschlag 44 und Rückstellmitnehmer 90 auftritt. Jedoch beginnt auch hier wieder, wie oben beschrieben, zum Zeitgewinn die Beschleunigung des Rückstellmitnehmers 90 in Richtung Hammer 40, bevor der Schlag des Hammers auf die bewegliche Matrize abgeschlossen ist. Das heißt, der Rückstellmitnehmer 90 hat bereits seine Fahrt nach oben aufgenommen, während der Hammer noch in der Endphase des Schlages in der Abwärtsbewegung ist.

Fig. 3 zeigt eine Querschnittsansicht des Rückholers 12 von der Seite, wobei die Führungskette 80 verkürzt dargestellt ist. Der Rückholer 12 wird durch einen NC-Motor 102 angetrieben, der über ein Getriebe 104 mit einer Antriebswelle 106 verbunden ist. Die Antriebswelle 106 ist über eine Verzögerungseinheit 100 mit dem Antriebsrad 88 verbunden. Die Verzögerungseinheit umfasst beim dargestellten Beispiel vier Stoßdämpfer 108 und zwei Rückstellfedern 110, wobei in einer ersten Dämpfungsebene zwei Dämpfer und eine Feder und in einer zweiten Dämpfungsebene zwei Dämpfer und eine Feder vorgesehen sind.

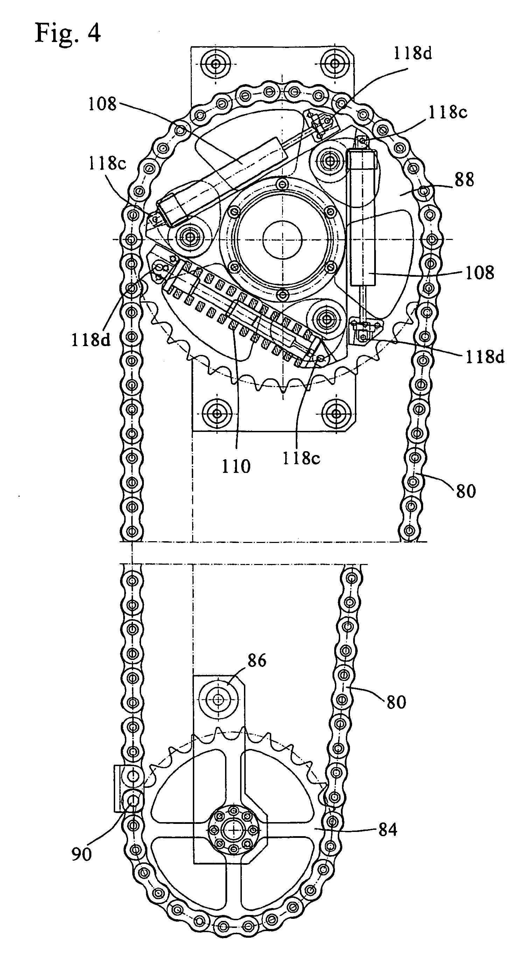

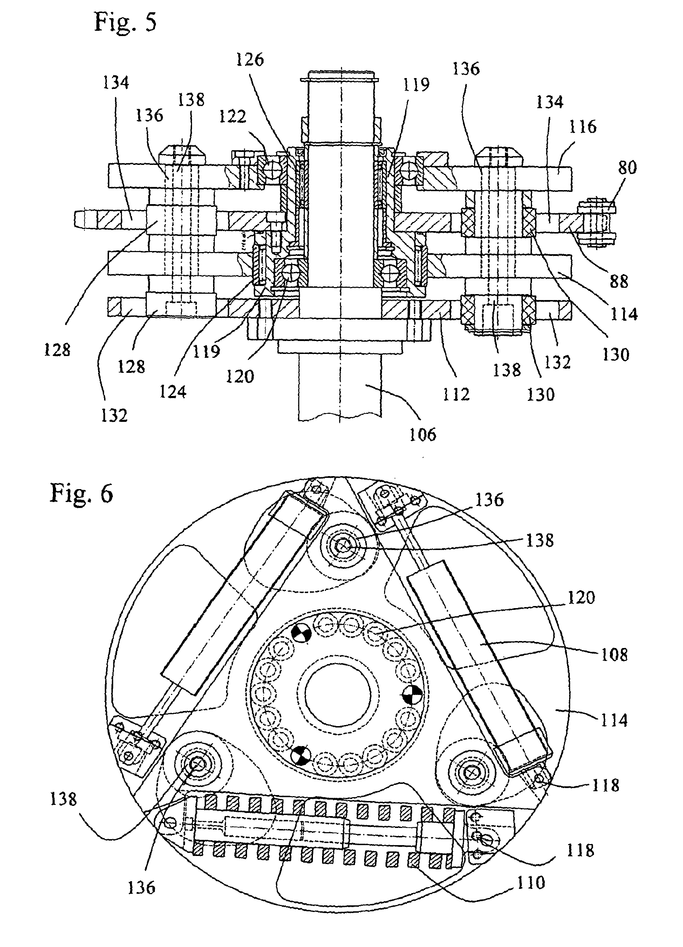

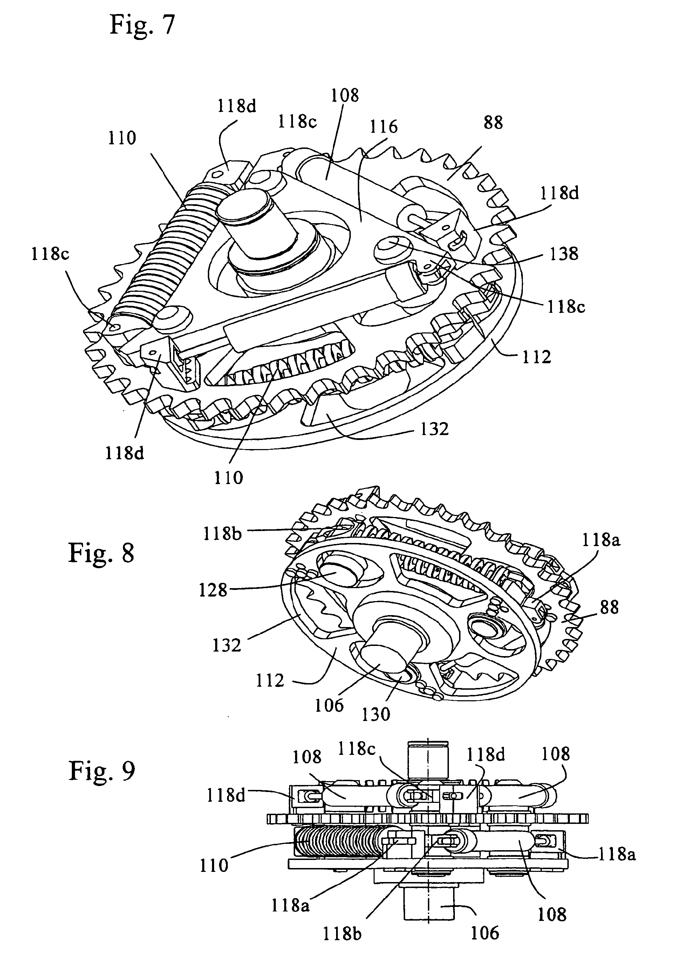

Fig. 4 zeigt eine Vorderansicht des Rückholers 12 mit ebenfalls verkürzt dargestellter Kette 80, wobei in der Vorderansicht vor dem Antriebsrad 88 dargestellt die zweite Ebene mit den zwei Dämpfern 108 und der Feder 110 zu sehen ist. Die Dämpfer 108 und die Federn 110 sind jeweils an beiden Enden mittels Schwenklager 118 schwenkbar gelagert. Die mit 118d bezeichneten Schwenklager der Dämpfer 108 bzw. der Feder 110 sind mit dem Antriebsrad 88 verbunden. Die mit 118c bezeichneten Lager sind mit einer dritten Scheibe 116 verbunden, die am besten der Querschnittsansicht von Fig. 5 bzw. der perspektivischen Ansicht von Fig. 7 zu entnehmen ist.

Wie sich der Querschnittsansicht von Fig. 5 entnehmen lässt, ist die Antriebswelle 106 starr mit einer ersten Scheibe 112 verbunden. Die erste Scheibe 112 ist bzgl. der Vorderansicht von Fig. 1 hinter dem Antriebsrad 88 angeordnet. An der ersten Scheibe 112 sind die Dämpfer 108 und die Feder 110 der ersten Dämpfungsebene schwenkbar an einem Ende an den Lagern 118a gelagert. Die Lager 118a sind am besten der perspektivischen Ansicht von Fig. 8 bzw. der Draufsicht von Fig. 9 zu entnehmen. In der ersten Dämpfungsebene ist eine zweite Scheibe 114 angeordnet, an der die beiden Dämpfer 108 und die Feder 110 der ersten Dämpfungsebene mittels Lagern 118b schwenkbar gelagert sind.

Die zweite Scheibe 114 ist über Bolzen 138 starr mit der dritten Scheibe 116 verbunden. Wie Fig. 5 zu entnehmen ist, ist das Antriebsrad 88 zwischen der zweiten und der dritten Scheibe 114, 116 angeordnet. Die Bolzen 138 sind durch große Ausnehmungen 134 im Antriebsrad 88 geführt, so dass sich die zweite und dritte Scheibe 114, 116 gegenüber dem Antriebsrad 88 über einen vorgegebenen Bereich verdrehen lassen. Wie oben bereits beschrieben, liegen die zwei Dämpfer 108 und die Feder 110 in der zweiten Dämpfungsebene auch in der Ebene der dritten Scheibe 116. Über die Schwenklager 118c, 118d verbinden zwei Dämpfer und eine Feder die dritte Scheibe 116 mit dem Antriebsrad 88.

Das Antriebsrad 88 ist starr mit einer Hülse 119 verbunden. Die Hülse 119 ist verdrehbar mittels eines ersten Kugellagers 120 und eines zweiten Nadellagers 126 an der Antriebswelle 106 bzw. deren Verlängerung gelagert. Verdrehbar gegenüber der Hülse 119 ist mittels eines ersten Nadellagers 124 die zweite Scheibe 114 gelagert. Die dritte Scheibe 116 ist mittels eines zweiten Kugellagers 122 ebenfalls verdrehbar auf der Hülse 119 gelagert. Somit ist die erste Scheibe 112 starr mit der Welle 106 verbunden, die Hülse 119 mit dem Antriebsrad 88 ist verdrehbar gegenüber der Welle 106 gelagert und die miteinander starr verbundene zweite und dritte Scheibe 114, 116 sind drehbar gegenüber der Hülse 119 gelagert (und somit auch drehbar gegenüber der Welle 106).

Die Verzögerungseinheit 100 wirkt nun so, dass sobald der Rückstellmitnehmer 90 des Rückholers 12 am Anschlag 44 des Hammers 40 anschlägt, der Rückstellmitnehmer 90 zusammen mit der Führungskette 80 und dem Antriebsrad 88 aufgrund der Massenträgheit (oder des Eigenimpulses) des Hammers 40 abgebremst wird. Das Abbremsen wird nun nicht starr auf den NC-Motor 102 übertragen, sondern die Verzögerungseinheit 100 bewirkt eine Verzögerung. Bei dieser Verzögerung dreht der Antriebsmotor 102 zwar die Antriebswelle 106 unverändert in die Richtung, in der der Rückstellmitnehmer 90 nach oben gezogen würde, jedoch folgt das Antriebsrad 88 nicht mehr der Drehgeschwindigkeit der Welle 106. Mit einsetzender Verzögerung werden die zunächst ausgefahrenen Kolbenstangen der Dämpfer 108 in beiden Ebenen in den Zylinder geschoben und gleichzeitig wird die Feder 110 durch Zusammendrücken gespannt. Das heißt, in der ersten Dämpfungsebene verkürzt sich der Abstand zwischen den Lagern 118a und 118b des jeweiligen Dämpfers bzw. an der Feder, und in der zweiten Ebene verkürzt sich entsprechend der Abstand zwischen den Lagerpaaren 118c und 118d. Idealerweise sind die Dämpfungskräfte und die Rückstellkräfte durch die Feder 110 in beiden Dämpfungsebenen gleich, so dass beispielsweise bei stehendem Antriebsrad 88 und bei Verdrehung der Welle 106 um 30° die Hübe der Dämpfer und Federn untereinander aufgeteilt werden, so dass die miteinander verbundene zweite und dritte Scheibe 114, 116 eine Verdrehung um 15° gegenüber der Welle 106 erfahren.

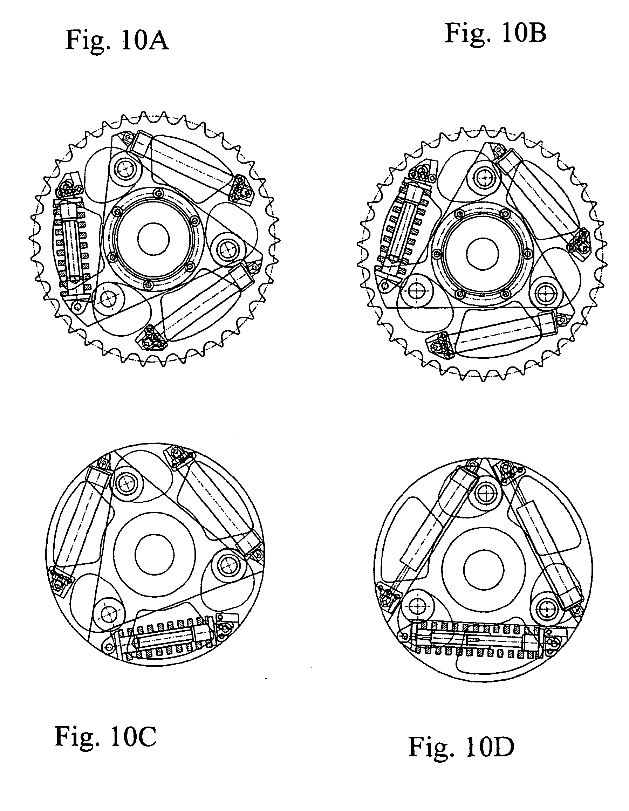

Die Fig. 10A bis 10C zeigen die erste und zweite Dämpfungsebene bei voll eingefahrener Kolbenstange am Dämpfer 108 und bei maximal komprimierter Feder 110. Fig. 10D zeigt die Anordnung bei voll ausgefahrenem Kolben des Dämpfers 108 und bei vollständig zurückgestellter Feder 110.

Die Querschnittsansicht von Fig. 5 zeigt, dass die Bolzen 138, die an der dritten Scheibe 116 befestigt sind und die zweite und dritte Scheibe 114, 116 starr miteinander verbinden, im Bereich zwischen den beiden Scheiben 114, 116 eine Hülse 136 über dem Bolzen 138 aufweisen. Auf zwei der drei Hülsen 136 (vgl. die drei in Fig. 6 dargestellten Bolzen 138) sind Dämpfungsanschläge 130 angeordnet, beispielsweise Dämpfungsanschläge aus Polyurethan. Kurz bevor die maximale Kompression der Dämpfer 108 und der Feder 110 in der zweiten Dämpfungsebene (in der Ebene der dritten Scheibe 116) erfolgt, kommt der Außenumfang der Dämpfungsanschläge 130 an den Innenwänden der Ausnehmung 134 des Antriebsrads 88 zur Anlage. Damit wird also großer Verdrehung der zweiten und dritten Scheibe 114, 116 gegenüber dem Antriebsrad 88 die Dämpfungswirkung verstärkt. Damit erfolgt dann eine sehr starke Dämpfung. Zur Begrenzung auf den tatsächlich maximalen Ausschlag, d.h. die absolut maximale Verdrehung der Scheiben 114, 116 gegenüber dem Antriebsrad 88 schlägt bei weiterer Verdrehung schließlich ein metallischer Anschlag 128, der an einem dritten der Bolzen 138 auf der Hülse 136 sitzt, an der Innenwand der Ausnehmung 134 an, so dass keine weitere Verdrehung mehr stattfinden kann. Entsprechend wirken die Dämpfungsanschläge 130 und der metallische Anschlag 128 als Endlagendämpfung bzw. als Endlagenanschlag gegen die Innenseite der Ausnehmung(en) 134, wenn durch die Rückstellkraft der Feder 110 bzw. beim Zurückfahren des Antriebs die Feder 110 und die Dämpfer 108 maximal auseinandergezogen werden.

Entsprechend der Verdrehung zwischen zweiter und dritter Scheibe 114, 116 bzgl. des Antriebsrads 88 ist auch die Verdrehung der ersten Scheibe 112 gegenüber der zweiten Scheibe 114 durch einen elastischen Dämpfungsanschlag 130 und einen metallischen Anschlag 128 begrenzt. Für die erste Dämpfungsebene sitzen diese in Ausnehmungen der ersten Scheibe 132, wobei der Dämpfungsanschlag 130 und der metallische Anschlag 128 für die erste Dämpfungsebene mit den Enden der Bolzen 138 verbunden sind, die in der Ebene der ersten Scheibe 112 liegen.

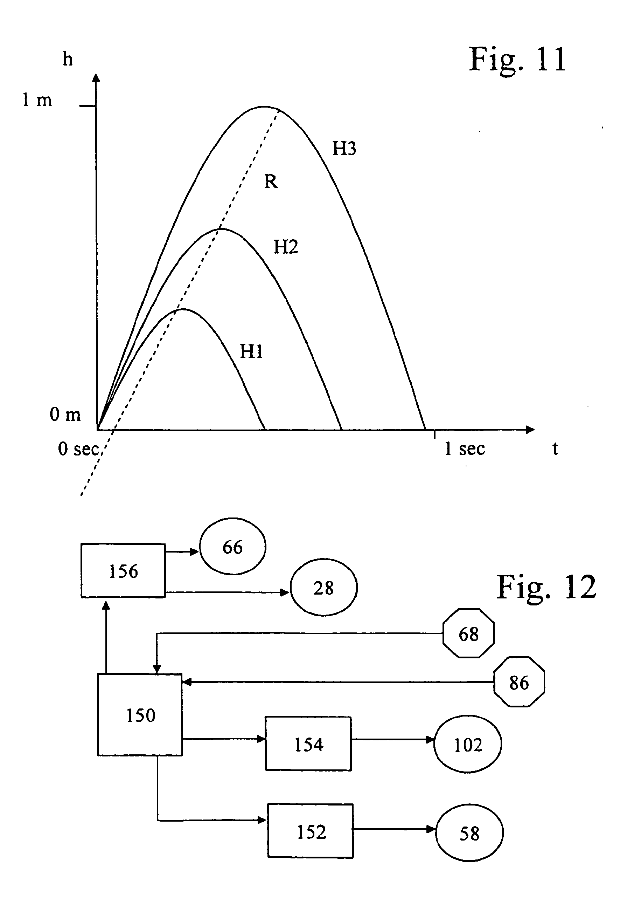

Fig. 11 zeigt schematisch das 'Einfangen' des zurückprellenden Hammers 40 durch den Rückstellmitnehmer 90 im Verlauf der Flugparabel bei drei verschiedenen Rückprallhöhen des Hammers. Die Flugparabel H 1 zeigt das Höhen/Zeit-Diagramm (h/t-Diagramm) bei einer maximalen Rückprallhöhe von ungefähr 0,3 m, die Parabel H2 bei ungefähr 0,5 m und die Parabel H3 bei ungefähr 1 m Rückprallhöhe h.

Wie oben beschrieben, sollte bei optimaler Dämpfung des auf die bewegliche Matrize 22 aufschlagenden Hammers 40 durch die Dämpfungseinheit 28 kein Zurückprallen des Hammers erfolgen. Dies kann jedoch bei einem Bedienungsfehler beispielsweise dann passieren, wenn die Energie des Hammers bzw. der Impuls des Hammers 40 nicht ausreicht, um das Stangenmaterial durch das Verschieben der beweglichen Matrize 22 gegenüber der starren Matrize 20 vollständig zu trennen. Je nach Überschussenergie ist die maximale Rückprallhöhe unterschiedlich hoch. Im Diagramm von Fig. 11 zeigt die gestrichelte und geradlinige Bahn R die Bewegungsbahn des Rückstellmitnehmers 90 im Falle des ununterbrochenen Zurückführen des Rückstellmitnehmers 90 nach oben. D.h. die geradlinige Linie tritt nur dann auf, wenn kein Kontakt zwischen Rückstellmitnehmer 90 und Hammer bzw. Anschlag 44 auftreten würde.

Auf der Zeitkoordinate bezeichnet 0 sec die Zeit des Aufpralls des Hammers auf die bewegliche Matrize 22 bzw. die Zeit, zu der der Hammer 40 die bewegliche Matrize 22 maximal nach unten ausgelenkt hat. Die Stellung der beweglichen Matrize bzw. des unteren Endes des Hammers 40 ist dabei gleichzeitig die Nullmarkierung der Höhe h = 0 m. Der Geraden R ist zu entnehmen, dass der Rückstellmitnehmer 90 bereits vor der Zeit 0 sec in Bewegung ist und sich im dargestellten Beispiel mit 2 m/sec nach oben bewegt. Die Nullstellung 0 m passiert der Rückstellmitnehmer 90 kurz nach dem Schlag des Hammers auf die bewegliche Matrize 22 bzw. kurz nach dem Erreichen des unteren Umkehrpunktes der Matrize 22. Somit ist vermieden, dass noch während des Schlagvorgangs ein Kontakt zwischen Anschlag 44 und Rückstellmitnehmer 90 auftritt.

Die Geschwindigkeit, die der Rückstellmitnehmer 90 bei 0 sec oder bei Höhe h = 0 m bereits hat, sorgt dafür, dass der Rückstellmitnehmer 90 sehr schnell dem Anschlag 44 zugestellt wird, wenn bei normalen Betriebsbedingungen der Hammer in der Stellung 0 m stehen bleibt und nicht zurückprallt. Sollte das Zurückprallen stattfinden, wie in Fig. 11 dargestellt, so wird der Hammer 40 in Abhängigkeit der maximalen Rückprallhöhe an den Schnittpunkten der Geraden R mit den Flugparabeln H1, H2 oder H3 durch den Mitnehmer 90 'eingefangen'. Dies verhindert einerseits, dass der Hammer nochmals auf die bewegliche Matrize aufschlägt und andererseits, dass die Zustellung vom Einfangpunkt zum Übergabepunkt des Beschleunigungsaggregats 10 nicht verzögert wird.

Nach dem Kontakt zwischen Rückstellmitnehmer 90 und Anschlag 44 des Hammers 40 wird wiederum, wie oben beschrieben, eine Verzögerung des Rückstellmitnehmers 90 durch die Verzögerungseinheit 100 bewirkt. Dabei wird zunächst die Geschwindigkeit des Rückstellmitnehmers 90 auf die des Hammers 40 angepasst und allmählich erfolgt dann eine Beschleunigung (wenn der Hammer ruht oder eine Bewegung nach oben hat) oder ein Abbremsen des Hammers (wenn dieser nach Erreichen der maximalen Rückprallhöhe bereits wieder in Richtung Schneideeinheit 8 zurückfällt) und dann eine allmähliche Anpassung der Geschwindigkeit des Hammers 40 an die durch die Antriebswelle 106 vorgegebene Geschwindigkeit. (Eine weitere Anpassung der Relativgeschwindigkeiten und damit ein noch sanfteres Dämpfen bzw. Verzögern ist unten beschrieben.)

Fig. 12 zeigt schematisch die Steuerstruktur der Schlagschneidemaschine 2. Eine Steuereinheit 150 steuert den Ablauf eines Trennzyklus und gibt die entsprechenden Ansteuersignale an einen Leistungssteller 152 für den Antriebsmotor 58 des Beschleunigungsaggregats 10, an einen Leistungssteller 152 für den NC-Motor 102 des Rückholers 12 und an eine Hydraulikeinheit 156, mit der auch das Druckbeaufschlagen und das Drucklos-Schalten bzw. Zurückstellen des Betätigungselements 66 erfolgt. Als Sensorsignale empfängt die Steuereinheit 150 die vom Drehsensor 86 gemeldete Drehstellung des Umlenkrads 84 und das Signal für die Endlagenstellung des Stellungssensors 68 bzgl. der Endlage der Kettenführung 64.

Ein beispielhafter Ablauf bei Normalbetrieb ist kurz zusammengefasst, wie folgt: Der Mitnehmer 60 des Beschleunigungsaggregats 10 ist in seiner Übernahmeposition, also der Antriebsmotor 58 ruht, und wird nicht durch den Leistungssteller 152 angetrieben. Der Rückstellmitnehmer 90 liegt am Anschlag 44 an und führt den Hammer 40 nach oben in die Übergabestellung, also der NC-Motor 102 wird durch den Leistungssteller 154 angesteuert und die Führungskette 80 führt den Rückstellmitnehmer 90 mit dem Hammer 40 nach oben. Während dieses Vorgangs ist die Kettenführung 64 von der Kette 50 zurückgezogen (nach rechts versetzt), was der Stellungssensor bzw. Endlagensensor 68 der Steuereinheit 150 meldet. Durch Erfassen der Position des Rückstellmitnehmers 90 über den entsprechenden Zusammenhang der Drehstellungsmeldung durch den Drehsensor 86 erkennt die Steuereinrichtung 150, wann die Ausnehmung 42 in Höhe des Mitnehmers 60 angelangt ist. In diesem Moment wird der NC-Motor 102 abgeschaltet und das Betätigungselement 66 betätigt, so dass der Mitnehmer 60 in die Ausnehmung 42 des Hammers 40 eingeführt wird. Wird dies durch den Endlagensensor 68 positiv zurückgemeldet, so steuert die Steuereinheit 150 via Leistungssteller 154 den NC-Motor 102 an, so dass dieser rückwärts läuft und den Rückstellmitnehmer nach unten führt, solange bis der Rückstellmitnehmer 90 im Umlenkbereich des Umlenkrads 84 liegt.

Kurz nachdem das Nachuntenfahren des Rückstellmitnehmers 90 gestartet wurde, beginnt gleichzeitig die Beschleunigung des Hammers durch das Beschleunigungsaggregat 10, wobei der Mitnehmer 60 mit einer vorgegebenen Beschleunigung durch Ansteuern des Antriebmotors 58 nach unten gezogen wird. Die Beschleunigung durch den Mitnehmer 60 erfolgt bis kurz vor Erreichen des Umlenkbereichs des Mitnehmers 60 an dem unteren Umlenkrad 52. Kurz vor der Umlenkung des Mitnehmers, also kurz bevor die vertikale Beschleunigungsstrecke des Mitnehmers entlang der Kette 50 verlassen wird, wird die Geschwindigkeit des Mitnehmers 60 so eingestellt, dass der Hammer 40 und der Mitnehmer 60 die gleiche Geschwindigkeit haben, also keine Beschleunigung von Hammer auf Mitnehmer oder von Mitnehmer auf Hammer ausgeübt wird. Damit kann mit Einsetzen der Umlenkung am unteren Umlenkrad 52 der Mitnehmer nahezu kraftfrei aus der Ausnehmung 42 herausgezogen werden.

Danach fliegt der Hammer kraftfrei (abgesehen von der Erdanziehung) auf die bewegliche Matrize 22 zu und führt dort den Schlag aus. Kurz vor dem Schlag wurde bereits wieder durch die Steuereinrichtung der Leistungssteller 154 angesteuert, so dass der Motor 102 den Rückstellmitnehmer 90 nach oben zieht. Da im Normalfall (d.h. bei optimal gedämpftem Schlag) der Hammer 40 auf der beweglichen Matrize 22 aufliegt, kommt der Rückstellmitnehmer 90 mit dem Anschlag 44 in der Stellung in Kontakt, in der der Anschlag 44 in Fig. 2 dargestellt ist. Dazu hat bereits die hydraulisch betätigbare Rückstelleinrichtung 28 durch entsprechende Ansteuerung der Hydraulikeinheit 156 die bewegliche Matrize 22 in ihre Grundstellung (siehe oben) zurückgestellt. Sobald der Rückstellmitnehmer 90 am Anschlag 44 anliegt, wird die Verzögerungseinheit 100 wirksam, was zunächst die Geschwindigkeit des Rückstellmitnehmers 90, der Führungskette 80 und des Antriebsrads 88 fast schlagartig reduziert. Das heißt, die Aufwärtsgeschwindigkeit, die der Rückstellmitnehmer 90 kurz vor dem Anschlag 44 (wie in Fig. 2 dargestellt) noch hat, wird beinahe auf Null abgebremst, da bei dem dargestellten Idealfall der Hammer 40 am unteren Punkt ruht. Dieses Abbremsen wird durch die Steuereinheit 150 wiederum erfasst, da diese mittels des Drehsensors 86 festgestellt, dass sich das Umlenkrad 84 nicht mit der Geschwindigkeit dreht, wie es sich drehen müsste, wenn das Umlenkrad 84 ohne Wirksamwerden der Verzögerungseinheit 100 durch den Motor 102 angetrieben wird.

Wenn anhand des Sensorsignals vom Sensor 86 und durch Vergleich mit der Dreh-Sollvorgabe für den Motor 102 das Wirksamwerden der Verzögerung festgestellt wird, wird zusätzlich zur Dämpfung mittels der Verzögerungseinheit 100 die Geschwindigkeit des Motors 102 ebenfalls auf einem reduzierten Antrieb herabgesetzt, bis wieder ein Gleichlauf zwischen dem Antrieb durch den Motor 102 und dem Rückstellmitnehmer 90 festgestellt wird. Bei Erreichen dieses Gleichlaufs (der zumindest vorübergehend erreicht wird) ist die Verzögerungseinheit 100 durch die Verzögerung maximal ausgelenkt und der Rückstellmitnehmer 90 sowie der Hammer 40 haben die Geschwindigkeit, die sie ohne Wirksamwerden der Verzögerungseinheit 100 durch den Antrieb des Motors 102 haben würden.

Kurzzeitig läuft das Umlenkrad 84 bzw. die Aufwärtsgeschwindigkeit des Rückstellmitnehmers 90 derjenigen des Motors 102 vor, sobald nämlich durch das Entspannen der Federn 110 die Verzögerungseinheit 100 in ihre ursprüngliche, nicht ausgelenkte Grundstellung zurückgestellt wird. Dabei dreht sich das Antriebsrad 88 schneller, als die vom Motor angetriebene Welle 106.

Bei einer weiteren Ausgestaltung kann zusätzlich zur Verzögerungseinheit 100 oder anstelle der Verzögerungseinheit 100 die Annäherung des Rückstellmitnehmers 90 an den Hammer 40 bzw. an dessen Anschlag 44 mittels der Steuereinheit 150 erfasst werden. Beispielsweise wird auf die momentane Stellung des Rückstellmitnehmers 90 anhand des Signals des Drehsensors 86 geschlossen - wie zuvor beschrieben. Auf die Position des Hammers 40 kann beispielsweise mittels eines dem Hammer 40 zugeordneten Positionssensors oder mittels eines Entfernungssensors geschlossen werden. Aus der Relativlage zwischen Rückstellmitnehmer 90 und Hammer 40 wird dann auf die kurz bevorstehende Annäherung des Rückstellmitnehmers 90 an den Hammer bzw. Anschlag 44 geschlossen, so dass mit der unmittelbar bevorstehenden Annäherung die Steuereinheit 150 den Leistungsteller 154 derart ansteuert, dass der Motor 102 abgebremst und die Relativgeschwindigkeit zwischen Rückstellmitnehmer und Hammer 40 deutlich reduziert wird. Auch damit ist ein sanftes Ankoppeln des Rückstellmitnehmers 90 an den Hammer 40 möglich und nach der Ankopplung kann dann der Hammer mit allmählich zunehmender Beschleunigung beschleunigt und in die Übergabeposition zurückgeführt werden. Die Stellung des Hammers 40 kann beispielsweise mittels eines am oberen Punkt der Hammerführung 46 angeordneten Laserentfernungsmessgeräts festgestellt werden.

### Bezugszeichenliste:

- 2: Schlagschneidemaschine
- 4: Amboss/Maschinensockel
- 6: Vertikalständer
- 8: Schneideeinheit
- 10: Beschleunigungsaggregat
- 12: Rückholer
- 14: Hammereinheit
- 16: Transporteinheit
- 20: starre Matrize
- 22: bewegliche Matrize
- 24: Durchgang
- 26: Grundblock
- 28: Dämpfungs- /Rückstelleinrichtung
- 30: Transportband
- 32: Selektorelement
- 40: Hammer
- 42: Ausnehmung
- 44: Anschlag
- 46: Führung
- 50: Kette
- 52: Umlenkrad
- 56: Antriebsrad
- 58: Antriebsmotor
- 60: Mitnehmer
- 62: Kettenspanner
- 64: Kettenführung
- 66: Betätigungselement
- 68: Stellungssensor
- 80: Führungskette
- 82: Kettenspanner
- 84: Umlenkrad
- 86: Drehsensor
- 88: Antriebsrad
- 90: Rückstellmitnehmer
- 100: Verzögerungseinheit
- 102: NC-Motor
- 104: Getriebe
- 106: Antriebswelle
- 108: Dämpfer
- 110: Feder
- 112: erste Scheibe
- 114: zweite Scheibe
- 116: dritte Scheibe
- 118: Schwenklager
- 118a: Lager an erster Scheibe
- 118b: Lager an zweiter Scheibe
- 118c: Lager an dritter Scheibe
- 118d: Lager an Antriebsrad
- 119: Hülse
- 120: erstes Kugellager
- 122: zweites Kugellager
- 124: erstes Nadellager
- 126: zweites Nadellager
- 128: metallischer Anschlag
- 130: Dämpfungsanschlag
- 132: Ausnehmung erste Scheibe
- 134: Ausnehmung Antriebsrad
- 136: Hülse
- 138: Bolzen
- 150: Steuereinheit
- 152: Leistungssteller
- 154: Leistungssteller
- 156: Hydraulikeinheit

## Patentansprüche

1. Schlagschneidevorrichtung (2) mit
einer Schneideeinheit (8) zum Trennen von Werkstücken,
einer Beschleunigungseinheit (10),
einem durch die Beschleunigungseinheit gegen die Schneideeinheit (8) beschleunigbaren Schlagelement (40), und
einer Rückstelleinrichtung (12) zum Zustellen des Schlagelements (40) zu einer Übergabeposition oder einem Übergabebereich der Beschleunigungseinheit (10),
wobei die Rückstelleinrichtung (12) einen auf einer Führungseinrichtung (80, 84, 88) angeordneten Mitnehmer (90) und eine Antriebseinrichtung (102) zum Verfahren des Mitnehmers mittels der Führungseinrichtung aufweist,
**gekennzeichnet durch**
eine Verzögerungseinrichtung (100; 86, 150, 154), die zumindest eine Dämpfungs- und/oder Federeinrichtung (108, 110) und/oder eine Rutschkupplung und/oder eine elastische Kupplung ist oder aufweist;
wobei der Mitnehmer (90) über die Verzögerungseinrichtung (100) mit der Antriebseinrichtung (102) verbunden ist, und
wobei die Antriebseinrichtung ein Elektromotor ist.

2. Vorrichtung nach Anspruch 1, wobei die Führungseinrichtung (80, 84, 88) ein mit der Antriebseinrichtung (102) verbundenes Antriebsrad (88) aufweist, wobei zumindest ein Teil der Dämpfungs- und/oder Federeinrichtung (108, 110) das Antriebsrad (88) mit der Antriebseinrichtung (102) koppelt.

3. Vorrichtung nach einem der vorhergehenden Ansprüche, wobei die Führungseinrichtung (80, 84, 88), insbesondere das Antriebsrad (88), und/oder der Mitnehmer (90) mittels zumindest zweier hintereinander geschalteter Dämpfungs-und/oder Federanordnungen (108, 110) mit der Antriebseinrichtung verbunden ist.

4. Vorrichtung nach einem der vorhergehenden Ansprüche, wobei die Verzögerungseinrichtung (100) zumindest ein hydraulisches Dämpfungselement und/oder zumindest ein hydraulisch betätigbares Rückstellelement aufweist.

5. Vorrichtung nach einem der vorhergehenden Ansprüche, wobei die Dämpfungseinrichtung (108) zwischen einem Antriebsrad (88) der Führungseinrichtung (80, 84, 88) und einer Antriebswelle (106) der Antriebseinrichtung (102) angeordnet ist.

6. Vorrichtung nach einem der vorhergehenden Ansprüche, wobei mittels einer Erfassungseinrichtung (86) eine Verzögerung des Mitnehmers (90) gegenüber der Führungseinrichtung (80, 84, 88) und/oder gegenüber der Antriebseinrichtung (102) und/oder eine Verzögerung der Führungseinrichtung (80, 84, 88) gegenüber der Antriebseinrichtung (102) erfassbar ist.

7. Vorrichtung nach einem der vorhergehenden Ansprüche, wobei eine Steuereinrichtung (150, 154) das Erfassungssignal der Erfassungseinrichtung (86) empfängt und in Abhängigkeit des Erfassungssignals, insbesondere bei Überschreiten eines Schwellwerts des Erfassungssignals, die Antriebseinrichtung (102) ansteuert.

8. Vorrichtung nach einem der vorhergehenden Ansprüche, wobei die Steuereinrichtung (150, 154) in Abhängigkeit des Erfassungssignals, insbesondere bei steigendem Erfassungssignal, die Antriebseinrichtung (102) so ansteuert, dass der von der Antriebseinrichtung auf den Mitnehmer (90) übertragene Vor- oder Antrieb verringert oder verzögert wird.

9. Vorrichtung nach einem der vorhergehenden Ansprüche, wobei die Erfassungseinrichtung (86) ein Positions- und/oder Drehgeber ist, insbesondere ein Positionsgeber mit dem die Position oder Auslenkung des Mitnehmers (90) und/oder der Führungseinrichtung (80, 84, 88) erfassbar ist oder ein Drehgeber mit dem die Drehgeschwindigkeit eines Drehelements (84, 88) der Führungseinrichtung (80, 84, 88) erfassbar ist.

10. Verfahren zum Zustellen eines von einer Beschleunigungseinheit (10) einer Schlagschneidevorrichtung (2) entkoppelten Schlagelements (40) mittels einer Rückstelleinrichtung (12) zu einer Übergabeposition oder einem Übergabebereich zum Ankoppeln des Schlagelements (40) an die Beschleunigungseinheit (10),
**dadurch gekennzeichnet, dass**
nach dem Ausführen eines Schlages des entkoppelten Schlagelements (40) auf eine Schneideeinheit (8):
ein bereits mittels einer Führungseinrichtung (80, 84, 88) geführter und in Bewegung befindlicher Mitnehmer (90) zur Anlage an das Schlagelement (40) oder in Eingriff mit dem Schlagelement kommt,
vor und/oder mit dem Zustandekommen der Anlage oder des Eingriffs eine Verzögerung des in Bewegung befindlichen Mitnehmers (90) erfolgt, so dass unmittelbar nach dem oder mit dem Anliegen des Mitnehmers (90) am Schlagelement (40) oder mit dem in Eingriff kommen des Mitnehmers (90) mit dem Schlagelement (40) durch den Mitnehmer eine anfänglich reduzierte Beschleunigung auf das Schlagelement (40) ausgeübt wird; wobei der Mitnehmer (90) über die Verzögerungseinrichtung (100) mit der Antriebseinrichtung (102) verbunden ist, und
wobei die Verzögerungseinrichtung (100) zumindest eine Dämpfungs- und/oder Federeinrichtung (108, 110) und/oder eine Rutschkupplung und/oder eine elastische Kupplung ist oder aufweist.

11. Verfahren nach Anspruch 10, wobei beim Erfassen der Verzögerung zwischen der Antriebseinrichtung (102) und dem Mitnehmer (90) der Antrieb oder der Vortrieb der Antriebseinrichtung (102) zumindest zeitweise reduziert wird.

12. Verfahren nach Anspruch 10 oder 11, wobei mittels einer Erfassungseinrichtung der Kontakt zwischen dem Mitnehmer (90) und dem Schlagelement (40) und/oder die Annäherung des Mitnehmers and das Schlagelement erfassbar ist und durch die Antriebseinrichtung (102) der Mitnehmer beim Kontakt und/oder bei Annäherung an das Schlagelement abgebremst wird.

13. Verfahren nach Anspruch 10, 11 oder 12, wobei der Mitnehmer (90) durch eine Antriebseinrichtung (102) angetrieben wird und mittels einer Erfassungseinrichtung (86) eine Verzögerung zwischen der Antriebseinrichtung (102) und dem Mitnehmer (90) erfasst wird.

## Claims

1. Impact cutting apparatus (2) having
a cutting unit (8) for separating workpieces,
an accelerating unit (10),
an impact element (40) adapted to be accelerated against the cutting unit (8) by the accelerating unit, and
a return device (12) for providing the impact element (40) at a transfer position or a transfer region of the accelerating unit (10),
wherein the return device (12) comprises a catch (90) arranged on a guiding device (80, 84, 88) and a drive device (102) for moving the catch by means of the guiding device,
**characterized by**
a retardation device (100; 86, 150, 154) being or comprising at least one damping and/or spring device (108, 110) and/or a sliding clutch and/or an elastic clutch;
wherein the catch (90) is connected to the drive device (102) via the retardation device (100), and
wherein the drive device is an electric motor.

2. Apparatus according to claim 1, wherein the guiding device (80, 84, 88) comprises a drive wheel (88) connected to the drive device (102), wherein at least a portion of the damping and/or spring device (108, 110) couples the drive wheel (88) to the drive device (102).

3. Apparatus according to anyone of the preceding claims, wherein the guiding device (80, 84, 88), in particular the drive wheel (88), and/or the catch (90) are connected to the drive device by means of at least two series-connected damping and/or spring assemblies (108, 110).

4. Apparatus according to anyone of the preceding claims, wherein the retardation device (100) comprises at least one hydraulic damping element and/or at least one hydraulically operable return element.

5. Apparatus according to anyone of the preceding claims, wherein the damping device (108) is arranged between a drive wheel (88) of the guiding device (80, 84, 88) and a drive shaft (106) of the drive device (102).

6. Apparatus according to anyone of the preceding claims, wherein a retardation of the catch (90) with respect to the guiding device (80, 84, 88) and/or with respect to the drive device (102) and/or a retardation of the guiding device (80, 84, 88) with respect to the drive device (102) can be detected by means of a detection device (86).

7. Apparatus according to anyone of the preceding claims, wherein a control device (150, 154) receives the detection signal of the detecting device (86) and controls the drive device (102) depending on the detection signal, in particular upon exceeding a threshold value of the detection signal.

8. Apparatus according to anyone of the preceding claims, wherein the control device (150, 154) controls the drive device (102) depending on the detection signal, in particular with increasing detection signal, such that the forwarding or drive transferred from the drive device to the catch (90) is decreased or retarded.

9. Apparatus according to anyone of the preceding claims, wherein the detecting device (86) is a position and/or rotary encoder, in particular a position encoder adapted to detect the position or deflection of the catch (90) and/or the guiding device (80, 84, 88) or a rotary encoder adapted to detect the rotating speed of a rotating element (84, 88) of the guiding device (80, 84, 88).

10. Method for delivering an impact element (40) decoupled from an accelerating unit (10) of an impact cutting apparatus (2) to a transfer position or a transfer region by means of a return device (12) for coupling the impact element (40) to the accelerating unit (10),
**characterized in that**
after performing an impact of the decoupled impact element (40) on a cutting unit (8):
a catch (90) already guided by means of a guiding device (80, 84, 88) and being in motion abuts on the impact element (40) or engages with the impact element,
before and/or with occurrence of the abutment or the engagement, a retardation of the catch (90) being in motion is effected such that immediately after or with the abutment of the catch (90) on the impact element (40) or with the engagement of the catch (90) with the impact element (40), an initially reduced acceleration is exerted on the impact element (40) by the catch;
wherein the catch (90) is connected to the drive device (102) via the retardation device (100), and
wherein the retardation device (100) is or comprises at least one damping and/or spring device (108, 110) and/or a sliding clutch and/or an elastic clutch.

11. Method according to claim 10, wherein upon detecting the retardation between the drive device (102) and the catch (90), the drive or the forwarding by the drive device (102) is at least temporarily reduced.

12. Method according to claim 10 or 11, wherein the contact between the catch (90) and the impact element (40) and/or the approach of the catch to the impact element can be detected by means of a detecting device and the catch is decelerated upon contact and/or upon approach to the impact element by the drive device (102).

13. Method according to claim 10, 11 or 12, wherein the catch (90) is driven by a drive device (102) and a retardation between the drive device (102) and the catch (90) is detected by means of a detecting device (86).

## Revendications

1. Dispositif (2) de coupe par percussion, comprenant
une unité de sectionnement (8) dévolue à la séparation de pièces à usiner,
une unité d'accélération (10),
un élément de percussion (40) pouvant subir une accélération vers ladite unité de sectionnement (8), sous l'action de ladite unité d'accélération,
un système de rappel (12), conçu pour présenter ledit élément de percussion (40) à un emplacement de transfert ou à une zone de transfert de ladite unité d'accélération (10),
ledit système de rappel (12) comportant un organe d'entraînement (90) disposé sur un système de guidage (80, 84, 88), et un système d'entraînement (102) conçu pour déplacer ledit organe d'entraînement au moyen dudit système de guidage,
**caractérisé par**
un système de décélération (100; 86, 150, 154) se présentant au moins comme un système (108, 110) à amortisseurs et/ou à ressorts et/ou un accouplement patinant et/ou un accouplement élastique, ou équipé de ce(s) dernier(s);
l'organe d'entraînement (90) étant relié au système d'entraînement (102) par l'intermédiaire dudit système de décélération (100), et
ledit système d'entraînement étant un moteur électrique.

2. Dispositif selon la revendication 1, dans lequel le système de guidage (80, 84, 88) présente une roue d'entraînement (88) reliée au système d'entraînement (102), sachant qu'au moins une partie du système (108, 110) à amortisseurs et/ou à ressorts couple ladite roue d'entraînement (88) audit système d'entraînement (102).

3. Dispositif selon l'une des revendications précédentes, dans lequel le système de guidage (80, 84, 88), en particulier la roue d'entraînement (88), et/ou l'organe d'entraînement (90), est/sont relié(e)(s) au système d'entraînement par l'intermédiaire d'au moins deux systèmes (108, 110) à amortisseurs et/ou à ressorts, agencés en succession.

4. Dispositif selon l'une des revendications précédentes, dans lequel le système de décélération (100) présente au moins un élément amortisseur hydraulique et/ou au moins un élément de rappel actionnable hydrauliquement.

5. Dispositif selon l'une des revendications précédentes, dans lequel le système à amortisseurs (108) est interposé entre une roue d'entraînement (88) du système de guidage (80, 84, 88) et un arbre menant (106) du système d'entraînement (102).

6. Dispositif selon l'une des revendications précédentes, dans lequel une décélération de l'organe d'entraînement (90) par rapport au système de guidage (80, 84, 88) et/ou par rapport au système d'entraînement (102), et/ou une décélération dudit système de guidage (80, 84, 88) par rapport audit système d'entraînement (102), peu(ven)t être détectée(s) au moyen d'un système de détection (86).

7. Dispositif selon l'une des revendications précédentes, dans lequel un système de commande (150, 154) reçoit le signal de détection du système de détection (86) et active le système d'entraînement (102) en fonction dudit signal de détection, notamment en cas de dépassement d'une valeur de seuil dudit signal de détection.

8. Dispositif selon l'une des revendications précédentes, dans lequel le système de commande (150, 154) active le système d'entraînement (102) en fonction du signal de détection, en particulier lors d'un accroissement dudit signal de détection, de manière à restreindre ou à ralentir la propulsion ou l'avance transmise à l'organe d'entraînement (90) par ledit système d'entraînement.

9. Dispositif selon l'une des revendications précédentes, dans lequel le système de détection (86) est un capteur de positions et/ou de rotations, notamment un capteur de positions permettant de détecter la position ou l'excursion de l'organe d'entraînement (90) et/ou du système de guidage (80, 84, 88), ou un capteur de rotations permettant de détecter la vitesse angulaire d'un élément rotatif (84, 88) dudit système de guidage (80, 84, 88).

10. Procédé de présentation à un emplacement de transfert ou à une zone de transfert, au moyen d'un système de rappel (12), d'un élément de percussion (40) dissocié d'avec une unité d'accélération (10) d'un dispositif (2) de coupe par percussion, en vue d'accoupler ledit élément de percussion (40) à ladite unité d'accélération (10),
**caractérisé par le fait**
**qu'**à l'issue d'une percussion exercée sur une unité de sectionnement (8) par l'élément de percussion (40) dissocié :
un organe d'entraînement (90) en mouvement, déjà guidé au moyen d'un système de guidage (80, 84, 88), vient en applique contre l'élément de percussion (40) ou en prise avec ledit élément de percussion,
une décélération dudit organe d'entraînement (90), en mouvement, s'opère avant et/ou pendant l'instauration de la venue en applique ou de la venue en prise, de telle sorte qu'une accélération initialement restreinte soit imprimée audit élément de percussion (40), par ledit organe d'entraînement, immédiatement après ou en concomitance avec la venue en applique dudit organe d'entraînement (90) contre ledit élément de percussion (40), ou la venue en prise dudit organe d'entraînement (90) avec ledit élément de percussion (40) ; sachant que ledit organe d'entraînement (90) est relié au système d'entraînement (102) par l'intermédiaire du système de décélération (100), et
sachant que ledit système de décélération (100) comporte au moins un système (108, 110) à amortisseurs et/ou à ressorts et/ou un accouplement patinant et/ou un accouplement élastique.

11. Procédé selon la revendication 10, dans lequel la propulsion ou l'avance du système d'entraînement (102) est restreinte, au moins en partie, au stade de la détection de la décélération entre ledit système d'entraînement (102) et l'organe d'entraînement (90).

12. Procédé selon la revendication 10 ou 11, dans lequel le contact entre l'organe d'entraînement (90) et l'élément de percussion (40), et/ou le rapprochement dudit organe d'entraînement vis-à-vis dudit élément de percussion, peu(ven)t être détecté(s) au moyen d'un système de détection, ledit organe d'entraînement étant freiné, par le système d'entraînement (102), lors du contact et/ou du rapprochement vis-à-vis dudit élément de percussion.

13. Procédé selon la revendication 10, 11 ou 12, dans lequel l'organe d'entraînement (90) est entraîné par l'intermédiaire d'un système d'entraînement (102) et une décélération, entre ledit système d'entraînement (102) et ledit organe d'entraînement (90), est détectée au moyen d'un système de détection (86).
